**Europäisches Patentamt**

**European Patent Office**

**Office européen des brevets**

(19)

(11) Veröffentlichungsnummer: **0 089 498**
**B1**

(12) # EUROPÄISCHE PATENTSCHRIFT

(45) Veröffentlichungstag der Patentschrift:
27.08.86

(21) Anmeldenummer: **83101652.2**

(22) Anmeldetag: **01.04.81**

(60) Veröffentlichungsnummer der früheren Anmeldung
nach Art. 76 EPÜ: **0038949**

(51) Int. Cl.⁴: **C 03 B 37/025**

(54) **Verfahren zum Herstellen einer Mehrkern-Glasfaser für Lichtwellenleiterzwecke.**

(30) Priorität: **30.04.80 DE 3016705**

(43) Veröffentlichungstag der Anmeldung:
**28.09.83 Patentblatt 83/39**

(45) Bekanntmachung des Hinweises auf die Patenterteilung:
**27.08.86 Patentblatt 86/35**

(84) Benannte Vertragsstaaten:
**FR GB**

(56) Entgegenhaltungen:
**DE - A - 2 923 093**
**FR - A - 2 240 459**
**FR - A - 2 262 648**
**US - A - 3 455 666**
**US - A - 3 455 667**
**US - A - 3 902 089**

**ELECTRONICS LETTERS, Band 16, Nr. 4, Februar 1980,**
**Seiten 136-138, Hitchin, g.B., S. NAGASAWA et al.:**
**" Multi-glass-rod optical-fibre splicers made by drawing**
**technique"**

(73) Patentinhaber: **Siemens Aktiengesellschaft Berlin und**
**München, Wittelsbacherplatz 2, D-8000 München 2 (DE)**

(72) Erfinder: **Schneider, Hartmut, Dr., Blütenstrasse 12,**
**D-8000 München 40 (DE)**
Erfinder: **Weidinger, Friedrich, Rosenstrasse 50,**
**D-8028 Taufkirchen (DE)**

## Beschreibung

Die vorliegende Erfindung betrifft ein Verfahren zum Herstellen einer Mehrkern-Glasfaser für Lichtwellenleiterzwecke nach dem Oberbegriff des Patentanspruchs 1.

Verfahren der genannten Art sind beispielsweise aus der FR-A 2 262 648 und der FR-A 2 240 495 bekannt.

Bei dem Verfahren nach der FR-A2 262 648 wird die Mehrkern-Glasfaser aus einer Vorform gezogen, die aus einem Glaskörper, der an einer ebenen Oberfläche zwei für die Kerne der Faser vorgesehene parallele Streifen höherer Brechzahl aufweist, und aus einem mit einer ebenen Fläche auf die ebene Oberfläche des einen Glaskörpers aufgesetzten zweiten Glaskörper einheitlicher Brechzahl geformt ist. Zur Herstellung der beiden Streifen werden in dem einen Glaskörper zwei Nuten ausgebildet, deren Wände zunächst mit Glas der höheren Brechzahl beschichtet werden. Dann werden die Nuten mit einem Glaspulver gefüllt und das Pulver geschmolzen. Nach dem Erstarren des geschmolzenen Glases wird die Oberfläche des einen Glaskörpers plan geschliffen.

Bei dem Verfahren nach der FR-A 2 240 459 wird die Mehrkern-Glasfaser aus einer Vorform gezogen, die aus mehr als zwei prismatischen Glaskörpern zusammengesetzt ist, wobei jedem Kern ein prismatischer Körper aus Kernglas zugeordnet ist, während der umgebende Mantel aus mehreren prismatischen Körpern aus Mantelglas gebildet ist. Das Verfahren benötigt eine Vielzahl von prismatischen Körpern unterschiedlichen Profils.

Aus der US-PS 3 455 666 ist ein Verfahren zur Herstellung von Vorformen für Laserkomponenten bekannt, bei dem zwei rohrförmige Glaskörper, von denen jeder eine in Längsrichtung verlaufende ebene Fläche aufweist, an diesen Flächen zusammengebracht und fest miteinander verbunden werden und bei dem in die beiden rohrförmigen Glaskörper Stäbe aus Glas höherer Brechzahl eingebracht werden.

Aufgabe der Erfindung ist es, ein relativ unaufwendigeres Verfahren der eingangs genannten Art anzugeben.

Diese Aufgabe wird gemäss dem kennzeichnenden Teil des Patentanspruchs 1 dadurch gelöst, dass die Vorform aus zwei Glaskörpern geformt wird, von denen jeder zumindest einen in einer Längsrichtung des Glaskörpers verlaufenden integrierten Kern höherer Brechzahl und eine in der Längsrichtung verlaufende ebene Fläche aufweist, welche Glaskörper an ihren ebenen Flächen zusammengebracht und an ihren Stirnflächen fest miteinander verbunden werden.

Für die Herstellung der Glaskörper kann von einem Stab ausgegangen werden, der nach dem für die Herstellung von Lichtleitfasern besonders geeigneten CVD-Verfahren hergestellt wurde, das Fasern hoher Qualität liefert. An zwei solche Stäbe ist dann nur noch die achsparallele ebene Fläche anzuschleifen.

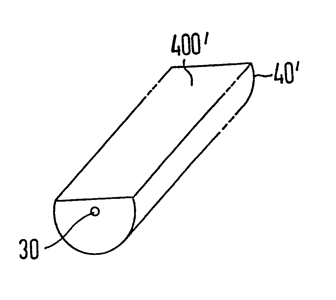

Ein Ausführungsbeispiel der Erfindung wird anhand der Figur in der folgenden Beschreibung näher erläutert.

Die Figur zeigt einen der beiden identischen Glaskörper, mit denen die Vorform durch Zusammenbringen dieser Glaskörper an ihren ebenen Flächen und durch festes Verbinden an ihren Stirnflächen miteinander hergestellt wird.

Bei dem Ausführungsbeispiel zur Herstellung einer durchgehenden Zweikernfaser wurde von Stäben ausgegangen, von denen jeder einen Kern 30 aus synthetischem Quarzglas, einen geschichteten Mantel aus $B_2O_3$-$SIO_2$-Glas und eine Hülle aus technischem Quarzglas aufwies. Die Stäbe wurden nach dem CVD-Verfahren hergestellt. Der Gesamtdurchmesser betrug 9,8 mm, der Durchmesser des optischen Mantels 5,2 mm und der Durchmesser des Kerns 0,8 mm. An jeden Stab wurde eine ebene Fläche 400' so angeschliffen, dass der Abstand der Achse des Kerns 30 von dieser ebenen Fläche 1,15 mm betrug. Die beiden abgeplatteten Stäbe 40' wurden zusammengefügt, und an beiden Enden wurden Hilfsstäbe aus Quarzglas angeschmolzen.

Die so erhaltene Vorform wurde zu einer Faser ausgezogen, die unmittelbar hinter dem Ofen mit einer Schutzschicht versehen wurde. Der Durchmesser dieser Faser betrug 70 μm, der Durchmesser des optischen Mantel 39 μm, die Kerne hatten einen Durchmesser von 4 bis 5 μm, der Abstand zwischen den Kernen betrug etwa 13 μm. Es zeigte sich, dass das Kopplungsverhältnis durch Verbiegen der Faser verändert werden kann. Sie ist damit für einen biegeempfindlichen Sensor geeignet.

## Patentanspruch

1. Verfahren zum Herstellen einer Mehrkern-Glasfaser für Lichtwellenleiterzwecke, wobei die Mehrkern-Glasfaser aus einer Vorform gezogen wird, dadurch gekennzeichnet, dass die Vorform aus zwei Glaskörpern (40') geformt wird, von denen jeder zumindest einen in einer Längsrichtung des Glaskörpers (40') verlaufenden integrierten Kern (30) höherer Brechzahl und eine in der Längsrichtung verlaufende ebene Fläche (400') aufweist, welche Glaskörper (40') an ihren ebenen Flächen (400') zusammengebracht und an ihren Stirnflächen fest miteinander verbunden werden.

## Claim

A method of making a multi-core optical glass fibre for light waveguides, in which the multi-core glass fibre is drawn from a preform, characterised in that the preform is formed from two glass bodies (40'), each of which has at least one integral core (30) of high refractive index, which extends in the longitudinal direction of the glass body (40'), and has a flat surface (400') extending in the longitudinal direction, which glass bodies (40') are brought together at their flat surfaces (400') and are firmly connected to one another at their end faces.

## Revendication

Procédé pour fabriquer une fibre de verre à plusieurs âmes, destinée à des guides d'ondes lumineuses, selon lequel la fibre de verre à plusieurs âmes est produite par étirage à partir d'une ébauche, caractérisé en ce que l'ébauche est formée de deux corps de verre (40') dont chacun présente au moins une âme (30) intégrée de plus haut indice de réfraction, s'étendant dans le sens longitudinal du corps de verre (40'), et une face plane (400') s'étendant dans le sens longitudinal, les corps de verre (40') étant réunis par leurs faces planes (400') et étant solidement reliés ensemble à leurs surfaces frontales.

400′

40′

30